# EUROPÄISCHE PATENTSCHRIFT

(11) **EP 3 694 749 B1**
(45) Veröffentlichungstag und Bekanntmachung des Hinweises auf die Patenterteilung: **01.12.2021**
(21) Anmeldenummer: 18793557.2
(22) Anmeldetag: 02.10.2018
(51) Int. Cl.: B60R 16/037, B60W 50/08, B60W 50/14, B60W 40/08, G08B 21/06, B60K 28/06, B60N 2/02, B60N 2/90

(54) **VERFAHREN ZUR ANSTEUERUNG VON FAHRZEUGFUNKTIONEN**
METHOD FOR CONTROLLING VEHICLE FUNCTIONS
PROCÉDÉ DE COMMANDE DE FONCTIONS DE VÉHICULE

(30) Priorität: 09.10.2017 DE 102017009353
(43) Veröffentlichungstag der Anmeldung: 19.08.2020
(73) Patentinhaber: Daimler AG, 70372 Stuttgart (DE)
(72) Erfinder: HOFMANN, Hansjörg, 70567 Stuttgart (DE); MUECKE, Daniel, 71032 Böblingen (DE); DASSLER, Jan, 73230 Kirchheim unter Teck (DE); SCHÖNHERR, Gudrun, 71088 Holzgerlingen (DE); ULMER, Matthias, 72108 Rottenburg (DE)
(74) Vertreter: JENSEN & SON
(86) Internationale Anmeldenummer: PCT/EP2018/076708
(87) Internationale Veröffentlichungsnummer: WO 2019/072621

(56) Entgegenhaltungen:
- EP-A1- 2 314 207
- WO-A1-2005/082232
- WO-A1-2014/118467
- DE-A1-102010 011 319
- DE-A1-102012 013 549
- DE-A1-102013 208 347
- US-A- 5 745 031
- US-A1- 2008 311 983

## Beschreibung

Die Erfindung betrifft ein Verfahren zur Ansteuerung von Fahrzeugfunktionen zur Steigerung eines Wohlbefindens und/oder zur Steigerung einer Aufmerksamkeit zumindest eines Fahrzeugnutzers in einem Fahrzeug. Weiterhin betrifft die Erfindung eine Vorrichtung zur Durchführung des Verfahrens und ein Fahrzeug mit einer solchen Vorrichtung.

Aus der DE 10 2012 013 549 A1 ist ein Verfahren zur Ermittlung eines Fahrerzustandes eines Fahrzeuges bekannt. Dabei wird aus sensoriellen Daten ein Maß für die Schwere der Unaufmerksamkeit und/oder Müdigkeit des Fahrers ermittelt und dem Fahrer wird in Abhängigkeit des ermittelten Maßes ein Warnhinweis ausgegeben. Zusätzlich wird dem Fahrer eine Anzahl von im Fahrzeug aktivierbarer Vitalisierungsmaßnahmen zur Verringerung der Unaufmerksamkeit und/oder Müdigkeit zur manuellen Auswahl und/oder Aktivierung ausgegeben.

Darüber hinaus ist aus der DE 10 2013 208 347 A1 ein Verfahren bekannt, bei dem in einem Fahrzeug zur Steigerung des Wohlbefindens eines Insassen Fahrzeugfunktionen angesteuert werden. Dabei wird vom Nutzer eine bestimmte Komfort-Konfiguration ausgewählt, und daraufhin werden mehrere dieser Komfort-Konfiguration zugeordnete Fahrzeugfunktionen angesteuert.

Der Erfindung liegt die Aufgabe zugrunde, ein gegenüber dem Stand der Technik verbessertes Verfahren zur Ansteuerung von Fahrzeugfunktionen zur Steigerung eines Wohlbefindens und/oder zur Steigerung einer Aufmerksamkeit zumindest eines Fahrzeugnutzers in einem Fahrzeug, eine Vorrichtung zur Durchführung des Verfahrens und ein Fahrzeug mit einer solchen Vorrichtung anzugeben.

Die Aufgabe wird erfindungsgemäß hinsichtlich des Verfahrens durch die in Anspruch 1, hinsichtlich der Vorrichtung durch die in Anspruch 9 und hinsichtlich des Fahrzeuges durch die in Anspruch 10 angegebenen Merkmale gelöst.

Vorteilhafte Ausgestaltungen der Erfindung sind Gegenstand der Unteransprüche.

Ein erfindungsgemäßes Verfahren zur Ansteuerung von Fahrzeugfunktionen zur Steigerung eines Wohlbefindens und/oder zur Steigerung einer Aufmerksamkeit zumindest eines Fahrzeugnutzers in einem Fahrzeug sieht vor, dass bei Auswahl zumindest eines bestimmten Nutzermenüs eine Anzahl von Fahrzeugfunktionen (F1 bis Fn) aktiviert wird. Dabei wird bei der Auswahl eines Nutzermenüs jeweils eine dem Nutzermenü zugeordnete Leitfunktion aus der Anzahl der Fahrzeugfunktionen (F1 bis Fn) vorgegeben und die zeitlichen und inhaltlichen Abläufe der anderen dem Nutzermenü zugeordneten Fahrzeugfunktionen (F1 bis Fn) werden in Bezug auf die Leitfunktion abgestimmt.

Durch Anwendung des Verfahrens sind die Fahrzeugfunktionen intelligent und koordiniert miteinander verknüpft, wodurch ein Gesamterlebnis für einen Fahrzeugnutzer und weitere Insassen des Fahrzeuges geschaffen wird. Dieses Gesamterlebnis bietet einen maximalen Mehrwert aus der Vielzahl der verfügbaren im Fahrzeug integrierten Fahrzeugfunktionen von Sonderausstattungen.

Da dem Fahrzeugnutzer vorzugsweise mehr als ein solches Nutzermenü zur Auswahl angeboten wird, können verschiedene Atmosphären im Innenraum des Fahrzeuges dargestellt werden, die insbesondere der Fahrzeugnutzer, bei welchem es sich um einen Fahrer des Fahrzeuges handelt, nutzen kann, um einerseits sein Wohlbefinden zu steigern und seine Aufmerksamkeit zu erhöhen und andererseits, um das Gesamterlebnis im Fahrzeug zu genießen.

In einer Ausführungsform werden als Fahrzeugfunktionen eine Ionisation, eine Beduftung, eine Sitzbelüftung, eine Massage, eine Klimatisierung, eine Sitzheizung, ein Ambientelicht, eine akustische Ausgabe, eine optische Ausgabe und/oder eine klangabhängige Bewegung zumindest von Teilbereichen eines Fahrzeugsitzes zeitlich und inhaltlich aufeinander abgestimmt. Darüber hinaus können auch die Fahrzeugfunktionen Motion Seating, Flächenheizung, beheizbare Nackenkissen oder andere Funktionen integriert werden.

In Abhängigkeit des durch den Fahrzeugnutzer gewählten Nutzermenüs wird eine Mehrzahl der dem entsprechenden Nutzermenü zugeordneten Fahrzeugfunktionen miteinander kombiniert, um das Wohlbefinden, insbesondere des Fahrzeugnutzers, zu steigern und/oder die Aufmerksamkeit zu erhöhen.

Eine Weiterbildung des Verfahrens sieht vor, dass zumindest eine in einen Fahrzeugsitz, insbesondere Fahrersitz, integrierte Sitzblase zumindest für eine Massagefunktion zeitgleich im Takt abgespielter Musik angesteuert wird. Dadurch kann beispielsweise die Aufmerksamkeit des Fahrzeugnutzers gezielt unterstützt werden, da der Fahrzeugnutzer durch die taktabhängige Ansteuerung einen Impuls erfährt. Auf diese Weise wird das Risiko eines sogenannten Sekundenschlafs reduziert.

In einer weiteren Ausführungsform des Verfahrens wird ein Ambientelicht in Abhängigkeit einer Hintergrundfarbe einer auf einer Anzeigeeinheit ablaufenden Animation gesteuert. Das Ambientelicht wird an die Hintergrundfarbe der Anzeigeeinheit angepasst, so dass der Innenraum durch die Anzeigeeinheit und das Ambientelicht harmonisch beleuchtet ist, wodurch ein Entspanntheitsgefühl des Fahrzeugnutzers, d. h. das Wohlbefinden, gesteigert werden kann.

Mittels eines Gebläses wird in einer Weiterbildung ein Luftstoß erzeugt, worauf ein auf einer Anzeigeeinheit dargestelltes Element sich zu bewegen scheint. Somit hat ein Betrachter der Anzeigeeinheit den Eindruck, dass die Bewegung des Elementes aus dem Luftstoß, welcher vorzugsweise mittels eines Gebläses der Klimaanlage des Fahrzeuges erzeugt wird, resultiert. Dadurch wird wiederum das koordinierte Zusammenspiel der Fahrzeugfunktionen dargestellt.

Eine weitere mögliche Ausführungsform des Verfahrens sieht vor, dass eine Bewegungsgeschwindigkeit einer auf einer Anzeigeeinheit dargestellten Animation in Abhängigkeit einer Geschwindigkeit abgespielter Musik eingestellt wird. Auch hier wirken zumindest diese beiden Fahrzeugfunktionen koordiniert zusammen, wobei hierdurch sowohl das Wohlbefinden gesteigert als auch die Aufmerksamkeit des Fahrzeugnutzers erhöht werden können.

Des Weiteren kann im Fall auf einer Anzeigeeinheit dargestellter Blumen, eine Beduftung des Innenraumes des Fahrzeuges aktiviert werden. Dabei kann beispielsweise ein den dargestellten Blumen entsprechender Duft dem Innenraum zugeführt werden, wobei der Fahrzeugnutzer vorzugsweise die Möglichkeit hat, die Beduftung zu deaktivieren.

Die Beduftung, insbesondere ein entsprechend gewählter Duft, kann zum einen zur Steigerung des Wohlbefindens und zum anderen zur Steigerung der Aufmerksamkeit des Fahrzeugnutzers eingesetzt werden.

Die oben beschriebenen Kombinationen von Fahrzeugfunktionen sind nur als Ausführungsbeispiele erläutert und zeigen nicht das gesamte Spektrum an möglichen und sinnvollen Verknüpfungen der Fahrzeugfunktionen. Wichtig ist, dass dem Fahrzeugnutzer durch die Kombination, intelligente Verknüpfung und zeitliche Abfolge verschiedener zu diesem speziellen Zweck geeigneter Fahrzeugfunktionen ein Gesamterlebnis im Sinne einer Inszenierung geboten wird.

Über die oben explizit erwähnten Fahrzeugfunktionen können auch weitere Fahrzeugfunktionen integriert werden.

Insbesondere werden als wählbares Nutzermenü ein entspannendes und beruhigendes Nutzermenü und ein belebendes und aktivierendes Nutzermenü angeboten. Beispielsweise kann das eine Nutzermenü aktiviert werden, wenn der Fahrzeugnutzer aufgrund eines langen Arbeitstages gestresst ist. Das andere Nutzermenü, insbesondere zur Steigerung der Aufmerksamkeit, kann beispielsweise bei langen und monotonen Fahrten des Fahrzeugs aktiviert bzw. dem Fahrzeugnutzer zur Aktivierung angeboten werden.

Darüber hinaus betrifft die Erfindung eine Vorrichtung zur Durchführung des oben beschriebenen Verfahrens und ein Fahrzeug mit einer solchen Vorrichtung.

Mittels der Vorrichtung ist dabei die zeitliche und inhaltliche Abstimmung der Fahrzeugfunktionen realisierbar, so dass für den Fahrzeugnutzer und gegebenenfalls für weitere Insassen ein Gesamterlebnis im Innenraum des Fahrzeuges erzeugbar ist.

Ausführungsbeispiele der Erfindung werden im Folgenden anhand von Zeichnungen näher erläutert.

Dabei zeigen:
- Fig. 1: schematisch einen Ausschnitt eines Innenraumes eines Fahrzeuges und

- Fig. 2: schematisch eine Vorrichtung zur Durchführung eines Verfahrens zur Ansteuerung von Fahrzeugfunktionen.

Einander entsprechende Teile sind in allen Figuren mit den gleichen Bezugszeichen versehen.

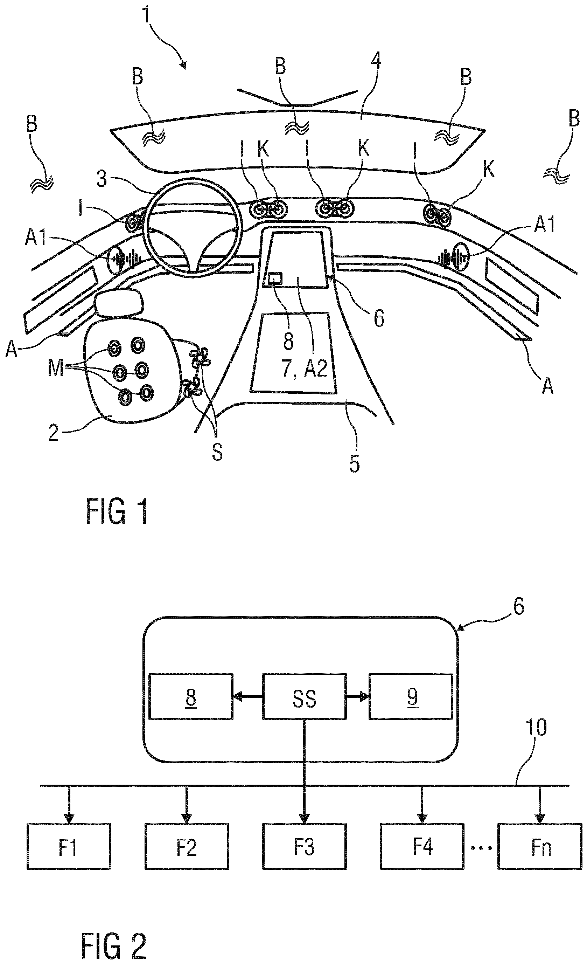

Figur 1 zeigt eine perspektivische Ansicht eines Ausschnittes eines Innenraumes eines Fahrzeuges 1, wobei ein Fahrzeugsitz 2, ein Lenkrad 3, eine Frontscheibe 4 und eine Mittelkonsole 5 dargestellt sind.

Das Fahrzeug 1 verfügt über eine Anzahl von in Figur 2 gezeigten Fahrzeugfunktionen F1 bis Fn, die zur Steigerung eines Wohlbefindens und/oder zur Steigerung einer Aufmerksamkeit eines nicht näher dargestellten Fahrzeugnutzers aktiviert werden können.

Dabei sind die Fahrzeugfunktionen F1 bis Fn über einen in die Mittelkonsole 5 integrierten Bordcomputer 6 mit einer Anzeigeeinheit 7 aktivierbar und auch wieder deaktivierbar, wobei der Bordcomputer 6 hierzu zumindest ein Bedienelement 8 aufweist.

Als aktivierbare Fahrzeugfunktionen F1 bis Fn sind u. a. eine Ionisation I, eine Beduftung B des Innenraumes, eine Sitzbelüftung S, eine Massage M, eine Klimatisierung K, eine Sitzheizung, ein Ambientelicht A, eine akustische Ausgabe A1, eine optische Ausgabe A2 mittels der Anzeigeeinheit 7 und/oder eine klangabhängige Bewegung zumindest von Teilbereichen des Fahrzeugsitzes 2 in dem Fahrzeug 1 vorhanden.

Zudem können bzw. kann als eine Fahrzeugfunktion F1 bis Fn eine Beheizung einer Mittelkonsole 5 und/oder eines Lenkrades 3 vorhanden sein. Darüber hinaus können bzw. kann als eine Fahrzeugfunktion F1 bis Fn die Funktion Motion Seating, Flächenheizung sowie beheizte Nackenkissen vorhanden sein.

Unter Motion Seating soll dabei die Funktion verstanden werden, bei der sich Sitzlehne und Sitzkissen mit relativ geringen Amplituden zyklisch vor und zurück bzw. auf und ab bewegen. Durch die permanente Veränderung der Sitzposition soll verkrampftem Sitzen bei längerer Fahrt entgegengewirkt werden.

Diese Vielzahl der Fahrzeugfunktion F1 bis Fn steht dem Fahrzeugnutzer zur Verfügung, wobei die einzelnen Fahrzeugfunktionen F1 bis Fn mittels nicht näher dargestellter Schalter im Fahrzeug 1 aktiviert und deaktiviert werden können.

Beispielsweise kann ein Einstellen der Sitzheizung, z. B. auf eine Stufe 2, mittels eines in einer Fahrzeugtür angeordneten, nicht gezeigten Schalters vorgenommen werden, wobei ein Massageprogramm und/oder eine Auswahl von Musik über den Bordcomputer 6 durch Bedienen eines Drehdrückstellers oder einer berührungssensitiven Schaltfläche aktiviert werden kann.

Jede Fahrzeugfunktion F1 bis Fn kann nur einzeln aktiviert werden, wobei aktivierte Fahrzeugfunktionen F1 bis Fn zeitlich und inhaltlich nicht aufeinander abgestimmt sind.

So ist es z. B. möglich, dass als Programm einer Massage M "Active Workout" und als Thema des Ambientelichtes A "Purple Sky" eingestellt ist.

Um aktivierte Fahrzeugfunktionen F1 bis Fn zeitlich und inhaltlich aufeinander abzustimmen, ist vorgesehen, dass die Fahrzeugfunktionen F1 bis Fn mittels des Bordcomputers 6, welcher eine Steuereinheit darstellt, zu koordinieren, wie in Figur 2 näher gezeigt ist.

Die einzelnen Fahrzeugfunktionen F1 bis Fn werden zentral mittels eines Anwendungsprogrammes, welches in dem Bordcomputer 6 hinterlegt ist, intelligent gesteuert.

Mittels des Bordcomputers 6 und/oder einer anderen geeigneten Steuereinheit werden alle einzelnen Fahrzeugfunktionen F1 bis Fn, insbesondere deren Komponenten zum Ausführen der jeweiligen Fahrzeugfunktion F1 bis Fn, angesteuert.

Mittels der zentralen Ansteuerung der Fahrzeugfunktionen F1 bis Fn wird eine koordinierte Gestaltung von Abläufen der einzelnen Fahrzeugfunktionen F1 bis Fn ermöglicht.

Dazu ist auf dem Bordcomputer 6 eine Steuerungssoftware SS implementiert, die sowohl mit dem Bedienelement 8, welches eine Mensch-Maschine-Schnittstelle darstellt, als auch mit einem Audio-Abspielgerät 9 des Fahrzeuges 1 zur akustischen Ausgabe A1 verbunden ist.

Der Bordcomputer 6 ist zur Ansteuerung der einzelnen Fahrzeugfunktionen F1 bis Fn mit einem Bussystem 10 des Fahrzeuges 1, insbesondere einem CAN-Bus, gekoppelt.

Durch die zentrale Ansteuerung der Fahrzeugfunktionen F1 bis Fn mittels des Bordcomputers 6 kann ein Verhalten, insbesondere ein Ablauf, der einzelnen Fahrzeugfunktionen F1 bis Fn zeitlich und inhaltlich aufeinander abgestimmt werden, wodurch eine Gesamtatmosphäre für den Fahrzeugnutzer und weitere Insassen des Fahrzeuges 1 erzeugt wird.

Beispielsweise werden aufblasbare Sitzblasen, die zur Fahrzeugfunktion F1 bis Fn Massage M dienen zeitgleich im Takt abgespielter Musik angesteuert.

Denkbar ist auch, dass ein Klang, d. h. insbesondere die akustische Ausgabe A1, über Schallwandler, so genannte Exciter, in mechanische Bewegung, beispielsweise des Fahrzeugsitzes 2, übertragen und so zum körperlichen Sounderlebnis wird. Diese Fahrzeugfunktion F1 bis Fn ist unter dem Begriff 4D-Sound bekannt.

Alternativ oder zusätzlich kann vorgesehen sein, dass das Ambientelicht A in Abhängigkeit einer Hintergrundfarbe einer auf einer Anzeigeeinheit 7 ablaufenden Animation angepasst wird.

Wiederum alternativ oder zusätzlich wird mittels eines Gebläses einer Klimaanlage des Fahrzeuges 1 ein Luftstoß erzeugt, aus welchem eine Bewegung zumindest eines auf einer Anzeigeeinheit 7 dargestellten Elementes resultiert. Dadurch kann der Eindruck entstehen, dass die Bewegung des Elementes aus dem Luftstoß resultiert.

Eine Ausführungsform sieht vor, dass sich eine auf der Anzeigeeinheit 7 dargestellte Animation in Abhängigkeit einer Geschwindigkeit abgespielter Musik bewegt, wodurch ein harmonischer Eindruck zwischen der Anzeigeeinheit 7 und der Musik entsteht.

Des Weiteren ist vorgesehen, dass bei auf der Anzeigeeinheit 7 dargestellten Blumen die Beduftung B des Innenraumes des Fahrzeuges 1 aktiviert wird.

Durch das intelligente und koordinierte Zusammenspiel der Fahrzeugfunktionen F1 bis Fn wird insbesondere dem Fahrzeugnutzer ein maximal möglicher Mehrwert im Fahrzeug 1 integrierter Fahrzeugfunktionen F1 bis Fn geboten. Die oben dargestellten Kombinationen sind dabei keine abschließende Aufzählung, sondern dienen der Illustration des allgemeinen Gedankens.

Durch unterschiedliche Kombinationen von Fahrzeugfunktionen F1 bis Fn können einerseits unterschiedliche Atmosphären im Innenraum des Fahrzeuges 1 geschaffen werden, durch die das Wohlbefinden und/oder die Aufmerksamkeit des Fahrzeugnutzers gesteigert werden kann. Hierzu kann der Fahrzeugnutzer ein gewünschtes Nutzermenü und somit eine entsprechende Atmosphäre wählen.

Andererseits kann eine entsprechende Atmosphäre geschaffen werden, so dass der Fahrzeugnutzer und weitere Insassen das Gesamterlebnis im Innenraum des Fahrzeuges 1 genießen können.

Wird beispielsweise das Nutzermenü "Activation" gewählt, werden die Fahrzeugfunktionen F1 bis Fn akustische Ausgabe A1, optische Ausgabe A2, Beduftung B, Ionisation I, Ambientelicht A, Sitzbelüftung S, der 4D-Sound und ein bewegter Fahrzeugsitz 2, Motion Seating, aktiviert und deren Abläufe zeitlich und inhaltlich aufeinander abgestimmt.

Für jedes Nutzermenü werden Leitfunktionen aus der Anzahl der Fahrzeugfunktionen F1 bis Fn, sogenannte Lead Functions, vorgegeben. Bei dem Nutzermenü "Activation" ist die Lead Function beispielsweise die akustische Ausgabe A1, wobei alle anderen dem Nutzermenü zugeordneten Fahrzeugfunktion F1 bis Fn in Bezug auf die Leitfunktion angepasst werden.

Bei dem Nutzermenü "Refreshment" stellt insbesondere die Klimatisierung K die Leitfunktion dar.

## Patentansprüche

1. Verfahren zur Ansteuerung von Fahrzeugfunktionen (F1 bis Fn) zur Steigerung eines Wohlbefindens und/oder zur Steigerung einer Aufmerksamkeit zumindest eines Fahrzeugnutzers in einem Fahrzeug (1), wobei bei Auswahl zumindest eines bestimmten Nutzermenüs eine Anzahl von Fahrzeugfunktionen (F1 bis Fn) aktiviert wird,
**dadurch gekennzeichnet, dass** bei der Auswahl eines Nutzermenüs jeweils eine dem Nutzermenü zugeordnete Leitfunktion aus der Anzahl der Fahrzeugfunktionen (F1 bis Fn) vorgegeben wird und die zeitlichen und inhaltlichen Abläufe der anderen dem Nutzermenü zugeordneten Fahrzeugfunktionen (F1 bis Fn) in Bezug auf die Leitfunktion abgestimmt werden.

2. Verfahren nach Anspruch 1,
**dadurch gekennzeichnet, dass** als Fahrzeugfunktionen (F1 bis Fn) eine Ionisation (I), eine Beduftung (B), eine Sitzbelüftung (S), eine Massage (M), eine Klimatisierung (K), eine Sitzheizung, ein Ambientelicht (A), eine akustische Ausgabe (A1), eine optische Ausgabe (A2) und/oder eine klangabhängige Bewegung zumindest von Teilbereichen eines Fahrzeugsitzes (2) zeitlich und inhaltlich aufeinander abgestimmt werden.

3. Verfahren nach Anspruch 1 oder 2,
**dadurch gekennzeichnet, dass** zumindest eine in einen Fahrzeugsitz (2) integrierte Sitzblase zumindest für eine Massagefunktion zeitgleich im Takt abgespielter Musik angesteuert wird.

4. Verfahren nach einem der vorhergehenden Ansprüche,
**dadurch gekennzeichnet, dass** ein Ambientelicht (A) in Abhängigkeit einer Hintergrundfarbe einer auf einer Anzeigeeinheit (7) ablaufenden Animation gesteuert wird.

5. Verfahren nach einem der vorhergehenden Ansprüche,
**dadurch gekennzeichnet, dass** mittels eines Gebläses ein Luftstoß erzeugt wird, worauf ein auf einer Anzeigeeinheit (7) dargestelltes Element sich zu bewegen scheint.

6. Verfahren nach einem der vorhergehenden Ansprüche,
**dadurch gekennzeichnet, dass** eine Bewegungsgeschwindigkeit einer auf einer Anzeigeeinheit (7) dargestellten Animation in Abhängigkeit einer Geschwindigkeit abgespielter Musik eingestellt wird.

7. Verfahren nach einem der vorhergehenden Ansprüche,
**dadurch gekennzeichnet, dass** im Fall auf einer Anzeigeeinheit (7) dargestellter Blumen, eine Beduftung (B) aktiviert wird.

8. Verfahren nach einem der vorhergehenden Ansprüche,
**dadurch gekennzeichnet, dass** als wählbares Nutzermenü zumindest ein entspannendes und beruhigendes Nutzermenü und ein belebendes und aktivierendes Nutzermenü angeboten wird.

9. Vorrichtung zur Durchführung eines Verfahrens nach einem der vorhergehenden Ansprüche,
**dadurch gekennzeichnet, dass** ein mit einem Bordcomputer (6) gekoppeltes Bedienelement (8) zur Auswahl eines bestimmten Nutzermenüs vorgesehen ist, wobei durch die Bedienung des Bedienelementes (8) eine Anzahl von aktivierten Fahrzeugfunktionen (F1 bis Fn) und deren Abläufe zeitlich und inhaltlich aufeinander abgestimmt sind.

10. Fahrzeug (1) mit einer Vorrichtung nach Anspruch 9.

## Claims

1. Method for controlling vehicle functions (F1 to Fn) for increasing a wellbeing and/or for increasing an alertness of at least one vehicle user in a vehicle (1), wherein a number of vehicle functions (F1 to Fn) is activated following the selection of at least one specific user menu,
**characterised in that**, following the selection of a user menu, in each case a control function assigned to the user menu is preset from the number of vehicle functions (F1 to Fn) and the chronological and content-related processes of the other vehicle functions (F1 to Fn) assigned to the user menu are adjusted with respect to the control function.

2. Method according to claim 1,
**characterised in that**, as vehicle functions, an ionisation (I), a scenting (B), a seat ventilation (S), a massage (M), an air conditioning (K), a seat heating, an ambient light (A), an audio output (A1), a visual output (A2) and/or a sound-dependent movement of at least sub-regions of a vehicle seat (2) are coordinated in time and in a content-related fashion.

3. Method according to claim 1 or 2,
**characterised in that** at least one seat bubble integrated into a vehicle seat (2) at least for a massage function is controlled simultaneously in time with played music.

4. Method according to any of the preceding claims,
**characterised in that** an ambient light (A) is controlled in dependence on a background colour of an animation running on a display unit (7).

5. Method according to any of the preceding claims,
**characterised in that** an air blast is generated by means of a fan, whereupon an element shown on a display unit (7) appears to be moving.

6. Method according to any of the preceding claims,
**characterised in that** a speed of movement of an animation shown on a display unit (7) is set in dependence on a speed of played music.

7. Method according to any of the preceding claims,
**characterised in that** a scenting (B) is activated if flowers are shown on a display unit (7).

8. Method according to any of the preceding claims,
**characterised in that** at least one relaxing and calming user menu and an invigorating and activating user menu are offered as a selectable user menu.

9. Device for carrying out a method according to any of the preceding claims,
**characterised in that** a control (8) coupled to an on-board computer (6) is provided for the selection of a specific user menu, wherein a number of activated vehicle functions (F1 to Fn) and their processes are coordinated in time and in a content-related fashion by operating the control (8).

10. Vehicle (1) with a device according to claim 9.

## Revendications

1. Procédé de commande de fonctions de véhicule (F1 à Fn) pour accroître le bien-être et/ou accroître l'attention d'au moins un utilisateur du véhicule dans le véhicule (1), lorsqu'au moins un menu utilisateur déterminé est sélectionné, un certain nombre de fonction de véhicule (F1 à Fn) est activé,
**caractérisé en ce que** lorsqu'un menu utilisateur est sélectionné, une fonction de commande associée au menu utilisateur est prédéterminée à partir de la sélection des fonctions de véhicule (F1 à Fn) et les déroulements temporels et de contenu des autres fonctions de véhicules (F1 à Fn) associées au menu utilisateur sont adaptées par rapport à la fonction de commande.

2. Procédé selon la revendication 1,
**caractérisé en ce qu'**en tant que fonctions de véhicule (F1 à Fn), une ionisation (I), une aération (B), une aération de siège (S), un massage (M), une climatisation (K), un chauffage de siège, une lumière d'ambiance (A), une émission sonore (A1), une émission optique (A2) et/ou un mouvement dépendant d'un son d'au moins certains endroits d'un siège de véhicule (2) sont adaptées les unes aux autres en termes de temps et de contenu.

3. Procédé selon la revendication 1 ou la revendication 2,
**caractérisé en ce qu'**au moins une vessie de siège intégrée à un siège de véhicule (2) est commandée au moins pour une fonction de message simultanément avec une musique jouée.

4. Procédé selon l'une quelconque des revendications précédentes,
**caractérisé en ce qu'**une lumière d'ambiance (A) est commandée en fonction d'une couleur d'arrière-plan d'une animation se déroulant sur une unité d'affichage (7).

5. Procédé selon l'une quelconque des revendications précédentes,
**caractérisé en ce qu'**une ventilation produit un souffle, où un élément représenté sur une unité d'affichage (7) semble se déplacer.

6. Procédé selon l'une quelconque des revendications précédentes,
**caractérisé en ce qu'**une vitesse de déplacement d'une animation représentée sur une unité d'affichage (7) est réglée en fonction d'une vitesse de la musique jouée.

7. Procédé selon l'une quelconque des revendications précédentes,
**caractérisé en ce que** si des fleurs sont représentées sur une unité d'affichage (7), une diffusion de parfum (B) est activée.

8. Procédé selon l'une quelconque des revendications précédentes,
**caractérisé en ce que** comme menu utilisateur à sélectionner est proposé au moins un menu utilisateur reposant et calmant et un menu utilisateur vivifiant et stimulant.

9. Dispositif pour exécuter un procédé selon l'une quelconque des revendications précédentes,
**caractérisé en ce qu'**un élément de commande couplé à un ordinateur de bord (6) sert à la sélection d'un menu utilisateur déterminé, par l'utilisation de l'élément de commande (8) un certain nombre de fonctions de véhicule (F1 à Fn) activées et leurs déroulements sont adaptés les unes aux autres en termes de temps et de contenu.

10. Véhicule (1) équipé d'un dispositif selon la revendication 9.
